# EUROPÄISCHE PATENTANMELDUNG

(11) **EP 1 176 303 A2**
(43) Veröffentlichungstag der Anmeldung: **30.01.2002**
(21) Anmeldenummer: 01115589.2
(22) Anmeldetag: 28.06.2001
(51) Int. Cl.: F02M 25/06, F02M 25/07

(54) **Brennkraftmaschine und Verfahren zur aktiven Durchlüftung des Zylinderkurbelgehäuses derselben**

(30) Priorität: 25.07.2000 DE 10036128
(71) Anmelder: Volkswagen Aktiengesellschaft, 38436 Wolfsburg (DE)
(72) Erfinder: Spiegel, Leo, Dr., 71665 Vaihingen/Enz (DE); Söhlke, Günter, 38518 Gifhorn (DE)

(57) **Zusammenfassung**

Die Erfindung betrifft eine Brennkraftmaschine (10) und ein Verfahren zum Betreiben derselben, wobei die Brennkraftmaschine folgendes aufweist, einen Ansaugtrakt (12) für Frischluft (56), eine mit dem Ansaugtrakt (12) verbundene, aktive Durchlüftung eines Zylinderkurbelgehäuses (30) sowie eine mit dem Ansaugtrakt (12) verbundene Abgasrückführung (54). Hierbei ist der Ansaugtrakt (12) derart ausgebildet, daß die Teilströme aus rückgeführtem Abgas (58) und aus dem Zylinderkurbelgehäuse (30) abgesaugter, ölbeladener Luft (60) mit Blowby-Gas (60a) bis zum Eintritt in einen Brennraum der Brennkraftmaschine (10) getrennt voneinander geführt sind.

## Beschreibung

Die Erfindung betrifft ein Verfahren zum Betreiben einer Brennkraftmaschine mit wenigstens einem Brennraum und einem Ansaugtrakt zum Zuführen von Frischluft in den Brennraum, mit aktiver Durchlüftung eines Zylinderkurbelgehäuses der Brennkraftmaschine und mit einer Abgasrückführung, wobei sowohl aus dem Zylinderkurbelgehäuse abgesaugte, ölbeladene Luft mit Blowby-Gas wie auch rückgeführtes Abgas dem Ansaugtrakt zugeführt wird, gemäß dem Oberbegriff des Anspruchs 1. Die Erfindung betrifft ferner eine Brennkraftmaschine mit einem Ansaugtrakt für Frischluft, einer mit dem Ansaugtrakt verbundenen, aktiven Durchlüftung eines Zylinderkurbelgehäuses sowie einer mit dem Ansaugtrakt verbundenen Abgasrückführung, gemäß dem Oberbegriff des Anspruchs 4.

Die Entlüftung des Zylinderkurbelgehäuses in das Ansaugrohr oder den Luftfilter sowie die Abgasrückführung in den Ansaugtrakt sind beispielsweise aus "Fachkunde Kraftfahrzeugtechnik", 25. Auflage, 1994, Verlag EUROPA-LEHRMITTEL, Seite 290 bzw. Seite 234 bekannt. Eine aktive Durchlüftung des Zylinderkurbelgehäuses mittels Unterdruck hat den zusätzlichen Vorteil einer gezielten Gasführung. Die Einleitung des rückgeführten Abgases in den Ansaugtrakt erfolgt üblicherweise möglichst nahe am Zylinderkopf. Die zunehmende Verölung des Ansaugtraktes durch die aus dem Zylinderkurbelgehäuse stammende Luft zusammen mit dem heißen, rückgeführten Abgas führt jedoch nach einiger Zeit zu Ablagerungen (Verklumpungen) im Ansaugtrakt, die die Gemischbildung im Saugrohr negativ beeinflussen und frühzeitig entsprechende Wartungsarbeiten erforderlich machen.

Der vorliegenden Erfindung liegt daher die Aufgabe zugrunde, ein Verfahren und eine Brennkraftmaschine der obengenannten Art zur Verfügung zu stellen, wobei die obengenannten Nachteile überwunden und Funktionsstörungen im Ansaugtrakt bzw. Gemischbildungsfehler über eine lange Lebensdauer vermieden werden.

Diese Aufgabe wird erfindungsgemäß durch ein Verfahren der o.g. Art mit den in Anspruch 1 gekennzeichneten Merkmalen und durch eine Brennkraftmaschine der o.g.

Art mit den in Anspruch 4 gekennzeichneten Merkmalen gelöst. Vorteilhafte Ausgestaltungen der Erfindung sind in den abhängigen Ansprüchen angegeben.

Bei einem Verfahren der o.g. Art ist es erfindungsgemäß vorgesehen, daß im Ansaugtrakt die aus dem Zylinderkurbelgehäuse abgesaugte, ölbeladene Luft und das rückgeführte Abgas bis zum Eintritt in den Brennraum voneinander getrennt geführt werden.

Dies hat den Vorteil, daß einem Verkokungsaufbau im Ansaugtrakt wirksam entgegengewirkt wird.

Beispielsweise wird aus dem Zylinderkurbelgehäuse abgesaugte, ölbeladene Luft mit Blowby-Gas in ein Saugrohr oder einen Zylinderkopfflansch des Ansaugtraktes eingeleitet. Ferner wird bevorzugt das rückgeführte Abgas in ein Saugrohr oder einen Zylinderkopfflansch des Ansaugtraktes eingeleitet.

Ferner ist es bei einer Brennkraftmaschine der o.g. Art erfindungsgemäß vorgesehen, daß der Ansaugtrakt derart ausgebildet ist, daß die Teilströme aus rückgeführtem Abgas und aus dem Zylinderkurbelgehäuse abgesaugter, ölbeladener Luft mit Blowby-Gas bis zum Eintritt in einen Brennraum der Brennkraftmaschine getrennt voneinander geführt sind.

Dies hat den Vorteil, daß eine Verkokung oder Ausbildung von Ablagerungen im Ansaugtrakt durch Wechselwirkung zwischen dem Öl aus dem Zylinderkurbelgehäuse und dem rückgeführten, heißen Abgas weitgehend vermieden ist.

In einer besonders bevorzugten Ausführungsform einer Brennkraftmaschine mit zylinderindividuellen Einlaßkanälen, die in einem Zylinderkopf der Brennkraftmaschine vorgesehen sind, wobei in jedem Einlaßkanal ein diesen in zwei Kanäle trennendes Trennblech angeordnet ist, ist ein Einlaß in den Ansaugtrakt für die aktive Durchlüftung des Zylinderkurbelgehäuses derart angeordnet und ausgebildet, daß von der aktiven Durchlüftung des Zylinderkurbelgehäuses abgesaugte, ölbeladene Luft mit Blowby-Gas aus dem Zylinderkurbelgehäuse in einen vom Trennblech abgetrennten Kanal einströmt und ist ein Einlaß in den Ansaugtrakt für die Abgasrückführung derart angeordnet und ausgebildet, daß rückgeführtes Abgas in den entsprechend anderen vom Trennblech abgetrennten Kanal einströmt.

Zweckmäßigerweise weist die aktive Durchlüftung des Zylinderkurbelgehäuses ein Ventil auf, dessen Einlaßseite mit dem Zylinderkurbelgehäuse und dessen Auslaßseite mit einem Saugrohr oder einem Zylinderkopfflansch des Ansaugtraktes verbunden ist. Ferner ist in besonders bevorzugter Weise die Abgasrückführung mit einem Saugrohr oder einem Zylinderkopfflansch des Ansaugtraktes verbunden.

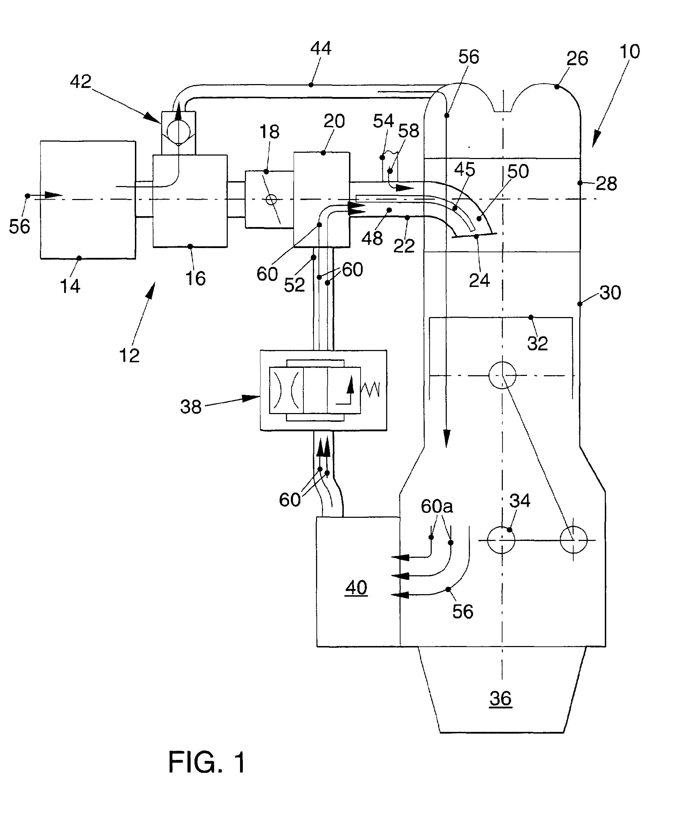

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Fig. eine bevorzugte Ausführungsform einer erfindungsgemäßen Brennkraftmaschine zum Ausführen des erfindungsgemäßen Verfahrens.

Die in der einzigen Fig. beispielhaft dargestellte bevorzugte Ausführungsform einer erfindungsgemäßen Brennkraftmaschine 10 umfaßt einen Ansaugtrakt 12 für Frischluft 56 mit einem Luftfilter 14, einem Vorvolumen 16, einer Drosselklappe 18, einem Saugrohr 20, einem Zylinderkopfflansch 22 und einem Einlaßkanal 24. Die Brennkraftmaschine 10 selbst setzt sich in bekannter Weise zusammen aus einer Zylinderkopfhaube 26, einem Zylinderkopf 28, in dem der Einlaßkanal 24 ausgebildet ist, einem Zylinderkurbelgehäuse 30, in dem ein Kolben 32, eine Kurbelwelle 34 sowie nicht dargestellte Ölrücklaufkanäle ausgebildet sind, und eine Ölwanne 36.

Zusätzlich ist eine aktive Durchlüftung des Zylinderkurbelgehäuses 30 (PCV = Positive Crankcase Ventilation) mit folgenden Komponenten vorgesehen: Ein PCV-Ventil 38 mit Grunddrosselfunktion ist eingangsseitig über einen Ölabscheider 40 mit dem Zylinderkurbelgehäuse 30 verbunden. Ferner ist das PCV-Ventil 38 ausgangsseitig mit dem Saugrohr 20 verbunden. Auf diese Weise stellt sich am PCV-Ventil 38 ein Unterdruck ein, der aus dem Zylinderkurbelgehäuse 30 ölbeladene Luft 60 sowie das vorhandene Blowby-Gas 60a über den Ölabscheider 40 absaugt. Zusätzlich ist am Vorvolumen 16 ein Rückschlagventil 42 vorgesehen, welches über eine Belüftungsleitung 44 mit der Zylinderkopfhaube 26 verbunden ist, so daß das über den Ölabscheider 40 vom Unterdruck am PCV-Ventil 38 abgesaugte Luftvolumen entsprechend durch gefilterte Frischluft 56 ersetzt wird, so daß sich im Zylinderkurbelgehäuse 30 ein definierter Unterdruck einstellt. Über die zuvor erwähnten Ölrücklaufkanäle strömt die Frischluft 56 unter der Wirkung des Unterdruckes bis in den Bereich des Ölabscheiders 40. Ferner strömen sogenannte Blowby-Gase 60a bis zum Ölabscheider 40.

In dem Einlaßkanal 24 ist ein Trennblech 46 vorgesehen, welches sich bis in den Zylinderkopfflansch 22 erstreckt und in diesem Bereich den Ansaugtrakt 12 in einen ersten Kanal 48 und einen zweiten Kanal 50 teilt. Erfindungsgemäß ist ein Einlaß 52 für die Einleitung von aus dem Zylinderkurbelgehäuse 30 abgesaugter, ölbeladener Luft 60 in den Ansaugtrakt 12 derart vorgesehen und ausgebildet, daß diese Luft 60 aus dem Zylinderkurbelgehäuse 30 ausschließlich durch den ersten Kanal 48 strömt, während ein Einlaß 54 zur Rückführung von Abgas 58 in den Ansaugtrakt 12 derart vorgesehen und ausgebildet ist, daß das rückgeführte Abgas 58 ausschließlich im zweiten Kanal 50 strömt. Wie anschaulich ersichtlich, sind dadurch diese beiden Teilströme 58 und 60 bis zum Austritt aus dem Einlaßkanal 24 voneinander getrennt geführt und vermischen sich erst beim Eintritt in eine nicht näher dargestellte Brennkammer oberhalb des Kolbens 32. Somit kommen das Öl in der Luft 60 aus dem Zylinderkurbelgehäuse 30 und das rückgeführte, heiße Abgas 58 erst im Brennraum und nicht schon im Ansaugtrakt 12 miteinander in Berührung, so daß eine Bildung von Ablagerungen im Ansaugtrakt 12 durch Wechselwirkung des heißen Abgases 58 mit dem Öl wirksam vermieden ist.

Sofern zusätzlich zu dem Trennblech 46 auch eine in der Fig. nicht dargestellte Schaltklappe zum wahlweise verschließen eines der beiden vom Trennblech 46 ausgebildeten Kanäle 48, 50 vorgesehen ist, erfolgt nach der Erfindung auch keine Verkokung mehr im Bereich der Schaltklappe, so daß durch entsprechende Ablagerungen bedingte Funktionsstörungen der Schaltklappe ebenfalls wirksam vermieden sind.

## Patentansprüche

1. Verfahren zum Betreiben einer Brennkraftmaschine mit wenigstens einem Brennraum und einem Ansaugtrakt zum Zuführen von Frischluft in den Brennraum, mit aktiver Durchlüftung eines Zylinderkurbelgehäuses der Brennkraftmaschine und mit einer Abgasrückführung, wobei sowohl aus dem Zylinderkurbelgehäuse abgesaugte, ölbeladene Luft mit Blowby-Gas wie auch rückgeführtes Abgas dem Ansaugtrakt zugeführt wird, **dadurch gekennzeichnet, daß** im Ansaugtrakt die aus dem Zylinderkurbelgehäuse abgesaugte, ölbeladene Luft und das rückgeführte Abgas bis zum Eintritt in den Brennraum voneinander getrennt geführt werden.

2. Verfahren nach Anspruch 1, **dadurch gekennzeichnet, daß** aus dem Zylinderkurbelgehäuse abgesaugte, ölbeladene Luft mit Blowby-Gas in ein Saugrohr oder einen Zylinderkopfflansch des Ansaugtraktes eingeleitet wird.

3. Verfahren nach Anspruch 1 oder 2, **dadurch gekennzeichnet, daß** das rückgeführte Abgas in ein Saugrohr oder einen Zylinderkopfflansch des Ansaugtraktes eingeleitet wird.

4. Brennkraftmaschine (10) mit einem Ansaugtrakt (12) für Frischluft (56), einer mit dem Ansaugtrakt (12) verbundenen, aktiven Durchlüftung eines Zylinderkurbelgehäuses (30) sowie einer mit dem Ansaugtrakt (12) verbundenen Abgasrückführung (54), **dadurch gekennzeichnet, daß** der Ansaugtrakt (12) derart ausgebildet ist, daß die Teilströme aus rückgeführtem Abgas (58) und aus dem Zylinderkurbelgehäuse (30) abgesaugter, ölbeladener Luft (60) mit Blowby-Gas (60a) bis zum Eintritt in einen Brennraum der Brennkraftmaschine (10) getrennt voneinander geführt sind.

5. Brennkraftmaschine (10) nach Anspruch 4 mit zylinderindividuellen Einlaßkanälen (24), die in einem Zylinderkopf (28) der Brennkraftmaschine (10) vorgesehen sind, wobei in jedem Einlaßkanal (24) ein diesen in zwei Kanäle (48, 50) trennendes Trennblech (46) angeordnet ist, **dadurch gekennzeichnet, daß** ein Einlaß (52) in den Ansaugtrakt (12) für die aktive Durchlüftung des Zylinderkurbelgehäuses (30) derart angeordnet und ausgebildet ist, daß von der aktiven Durchlüftung des Zylinderkurbelgehäuses (30) abgesaugte, ölbeladene Luft (60) mit Blowby-Gas (60a) aus dem Zylinderkurbelgehäuse (30) in einen vom Trennblech (46) abgetrennten Kanal (48) einströmt und daß ein Einlaß (54) in den Ansaugtrakt (12) für die Abgasrückführung derart angeordnet und ausgebildet ist, daß rückgeführtes Abgas in den entsprechend anderen vom Trennblech (46) abgetrennten Kanal (50) einströmt.

6. Brennkraftmaschine (10) nach Anspruch 4 oder 5, **dadurch gekennzeichnet, daß** die aktive Durchlüftung des Zylinderkurbelgehäuses (30) ein Ventil (38) aufweist, dessen Einlaßseite mit dem Zylinderkurbelgehäuse (30) und dessen Auslaßseite mit einem Saugrohr (20) oder einem Zylinderkopfflansch (22) des Ansaugtraktes (12) verbunden ist.

7. Brennkraftmaschine (10) nach einem der Ansprüche 4 bis 6, **dadurch gekennzeichnet, daß** die Abgasrückführung (54) mit einem Saugrohr (20) oder einem Zylinderkopfflansch (22) des Ansaugtraktes (12) verbunden ist.
